# EUROPEAN PATENT APPLICATION

(11) **EP 2 437 526 A2**
(43) Date of publication of application: **04.04.2012**
(21) Application number: 11007938.1
(22) Date of filing: 29.09.2011
(51) Int. Cl.: H04W 4/04

(54) **Method of providing service to on board unit with mobile device**

(30) Priority: 29.09.2010 US 387478
(71) Applicant: HTC Corporation, Taoyuan County 330 (TW)
(72) Inventor: Chien, Ho-Sung, Taoyuan City Taoyuan County 330 (TW); Wu, Chih-Hsiang, Taoyuan City Taoyuan County 330 (TW)
(74) Representative: Schmidbauer, Andreas Konrad

(57) **Abstract**

A method of providing service to an on board unit (OBU) in a car with a mobile device, for the mobile device is disclosed. The method comprises connecting to the OBU via a cable or wireless connection, and providing a positioning/navigation service to the OBU when a notification associated to positioning capability is received from the OBU.

## Description

### Cross Reference To Related Applications

This application claims the benefit of U.S. Provisional Application No. 61/387,478, filed on September 29, 2010 and entitled "Methods of serving automotive OBU with a mobile device", the contents of which are incorporated herein by reference.

### Background of the Invention

### 1. Field of the Invention

The present invention relates to an on-board unit (OBU) in a car, and more particularly, to a method of providing service to an OBU with a mobile device.

### 2. Description of the Prior Art

Formerly, an on-board unit (OBU) in the automobile only has very simplified functionality, such as FM/AM channel or CD player. Nowadays, with consumer electronics technology rapidly advancing/growing up, if a mobile device, such as a mobile phone, a personal digital assistant (PDA) or a tablet computer, is well-considered/connected together with an OBU, there will be many use cases or scenarios which could enrich user experience of automotive driver/passengers.

The applicant notice several issues as following. In the first issue, a driver may not be aware of some events (e.g. fuel running out, or some parts of the car is breaking down) of the car while driving, which may cause life-safety hazard. In this situation, the driver needs to find some places (e.g. gas station or car repair shop). However, the driver may not be able to fix the problem efficiently if not familiar with the place nearby.

In the second issue, when a driver enters the car, the driver usually needs to spend time setting some in-car environment (e.g. FM/AM channel, volume setting, car seat position setting, side mirror setting, etc). This is actually time consuming especially when the car is frequently driven by different people (e.g. in a family or a company). In addition, different passengers may also prefer some different settings (e.g. FM/AM channel, volume setting, etc).

In the third issue, when a driver or a passenger likes the entertainment or infotainment program that is played in the car, the driver or passenger may want to play it again whenever and wherever (e.g. outside the car). However, they are not able to record and save the program.

### Summary of the Invention

It is therefore an objective of the present invention to provide a method for providing service to an OBU with a mobile device.

A method of providing service to an on board unit (OBU) in a car with a mobile device, for the mobile device, is disclosed. The method comprises connecting to the OBU via a cable or wireless connection, and providing a positioning/navigation service to the OBU when a notification associated to positioning capability is received from the OBU.

A method of providing service to an on board unit (OBU) in a car with a mobile device, for the mobile device, is disclosed. The method comprises connecting to the OBU via a cable or wireless connection, reading an in-car-preference setting from the OBU, and storing the in-car-preference setting, whereby the OBU reads the in-car-preference setting from the mobile device to apply the in-car-preference setting.

A method of providing service to an on board unit (OBU) in a car with a mobile device, for the OBU, is disclosed. The method comprises reading an in-car-preference setting stored in the mobile device when the mobile device connects to the OBU via a cable or wireless connection, and applying the in-car-preference setting in the car.

A method of providing service to an on board unit (OBU) in a car with a mobile device, for the mobile device, is disclosed. The method comprises connecting to the OBU via a cable or wireless connection, and recording a program played by the OBU in the car.

These and other objectives of the present invention will no doubt become obvious to those of ordinary skill in the art after reading the following detailed description of the preferred embodiment that is illustrated in the various figures and drawings.

### Brief Description of the Drawings

Fig. 1 illustrates a schematic diagram of an exemplary device.

Figs. 2-7 are flowchart of an exemplary process.

### Detailed Description

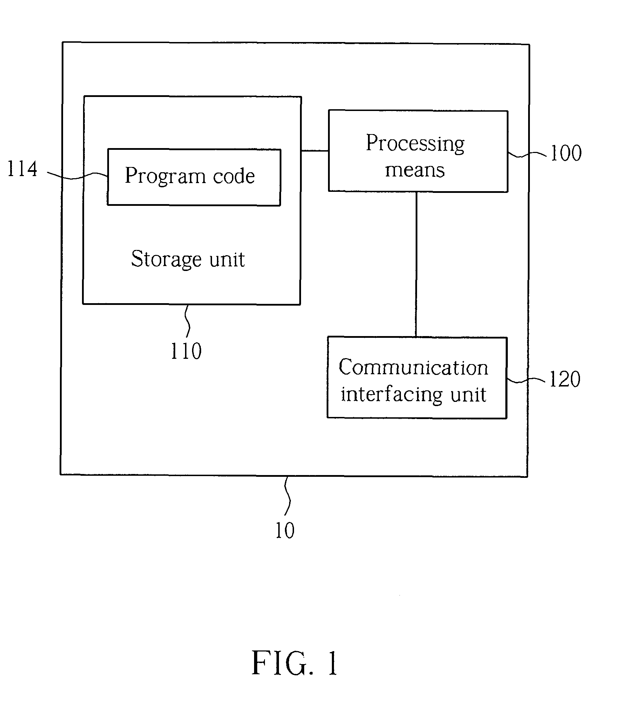

Fig. 1 illustrates a schematic diagram of an exemplary device 10. The device 10 can be a mobile device, such as a mobile phone, a personal digital assistant (PDA), a tablet computer, etc, and/or an on board unit (OBU). The device 10 may include a processing means 100 such as a microprocessor or Application Specific Integrated Circuit (ASIC), a storage unit 110 and a communication interfacing unit 120. The storage unit 110 may be any data storage device that can store program code 114, for access by the processing means 100. Examples of the storage unit 110 include but are not limited to a subscriber identity module (SIM)/universal subscriber identity module (USIM), read-only memory (ROM), flash memory, random-access memory (RAM), CD-ROMs, magnetic tape, hard disk, and optical data storage device. The communication interfacing unit 120 is preferably a radio transceiver and can exchange wireless signals with a network according to processing results of the processing means 100.

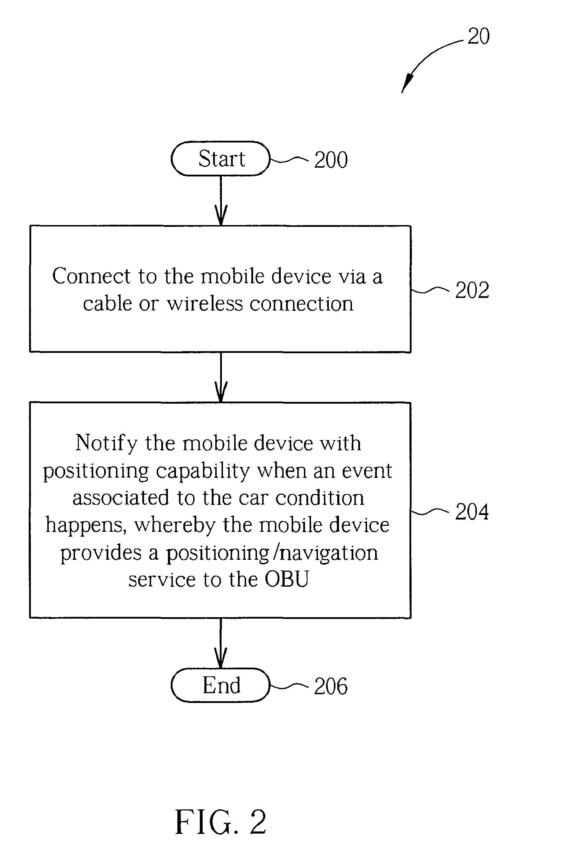

Please refer to Fig. 2, which illustrates a flowchart of an exemplary process 20. The process 20 is utilized in an on board unit, hereafter called OBU, in a car for reception service from a mobile device. The process 20 can be compiled into the program code 114 and includes the following steps:

Step 200: Start.

Step 202: Connect to the mobile device via a cable or wireless connection.

Step 204: Notify the mobile device with positioning capability when an event associated to the car condition happens, whereby the mobile device provides a positioning/navigation service to the OBU.

Step 206: End.

According to the process 20, when an event (e.g. fuel running out, or some parts of the car is breaking down) in the car happens, the OBU notifies the mobile device with positioning capability, such as GPS/navigator enabled. Therefore, the mobile device searches a place for gas refuel (e.g. gas station) or car fixing (e.g. car dealer) via its positioning/navigation functionality. The place can be a first location which is closest to/close to/nearby a second location of the car. Thus, the driver can handle the car accident as soon as possible, so as to avoid life-safety hazard.

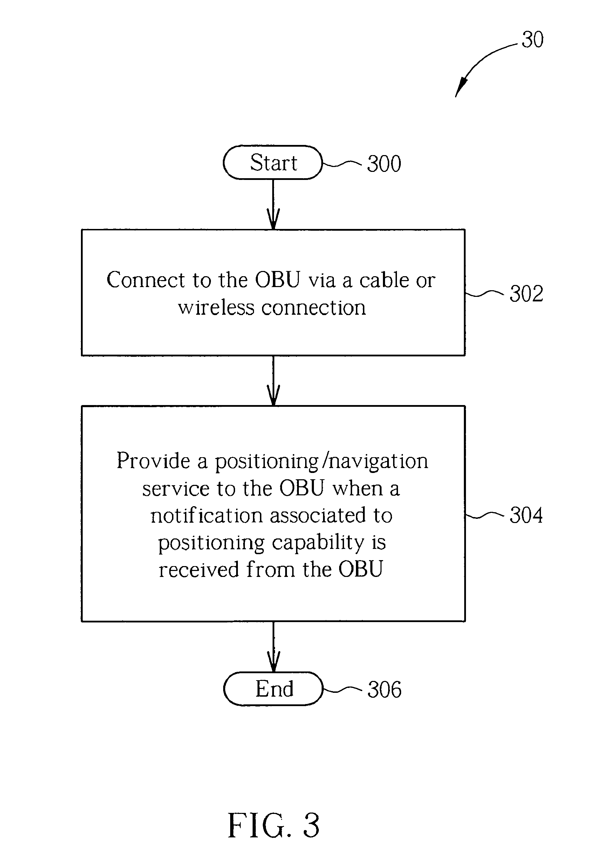

Please refer to Fig. 3, which illustrates a flowchart of an exemplary process 30. The process 30 is utilized in a mobile device for providing service to an on board unit (OBU). The process 30 can be compiled into the program code 114 and includes the following steps:

Step 300: Start.

Step 302: Connect to the OBU via a cable or wireless connection.

Step 304: Provide a positioning/navigation service to the OBU when a notification associated to positioning capability is received from the OBU.

Step 306: End.

According to the process 30, the mobile device provides its positioning/navigation functionality or service to the OBU when an event (e.g. fuel running out, or some parts of the car is breaking down) occurs, and thereby the driver can locate a position as soon as possible for handling the car accident, so as to avoid life-safety hazard. The detail can be referred from above, so it is omitted herein.

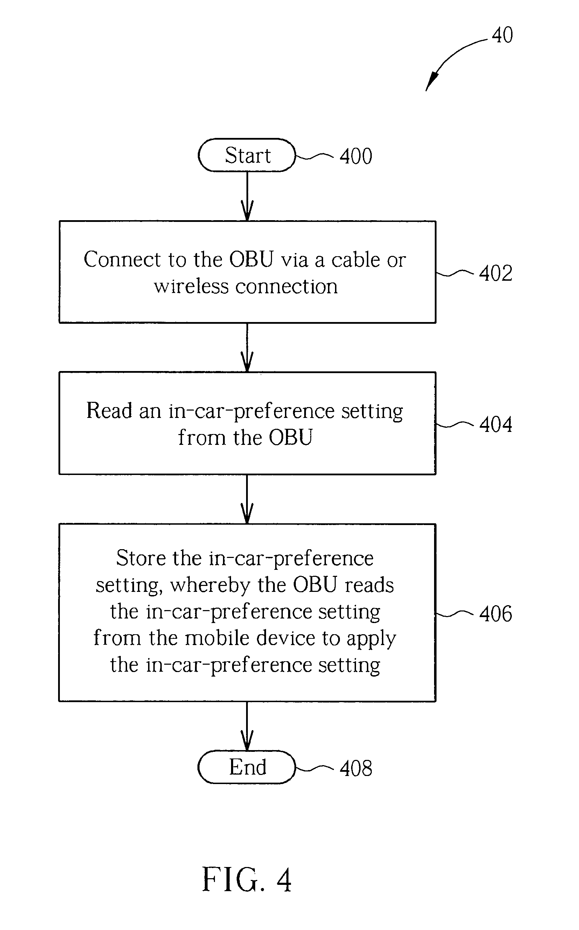

Please refer to Fig. 4, which illustrates a flowchart of an exemplary process 40. The process 40 is utilized in a mobile device for providing service to an on board unit (OBU). The process 40 can be compiled into the program code 114 and includes the following steps:

Step 400: Start.

Step 402: Connect to the OBU via a cable or wireless connection.

Step 404: Read an in-car-preference setting from the OBU.

Step 406: Store the in-car-preference setting, whereby the OBU reads the in-car-preference setting from the mobile device to apply the in-car-preference setting.

Step 408: End.

According to the process 40, a mobile device belonged to a driver or a passenger reads the in-car-preference setting (e.g. FM/AM channel setup, volume setting, car seat position setting, side mirror setting, etc) from the OBU when connecting to the OBU, and then stores the in-car-preference setting. Therefore, the OBU can read the in-car-preference setting from the mobile device if the OBU and mobile device are connected again, and automatically apply the in-car-preference setting, to reduce time consuming in car environment setup and fulfill passenger's preference setting.

Note that, the mobile device may provide a user interface for a user to determine that the mobile device reads in-car-preference setting from the OBU.

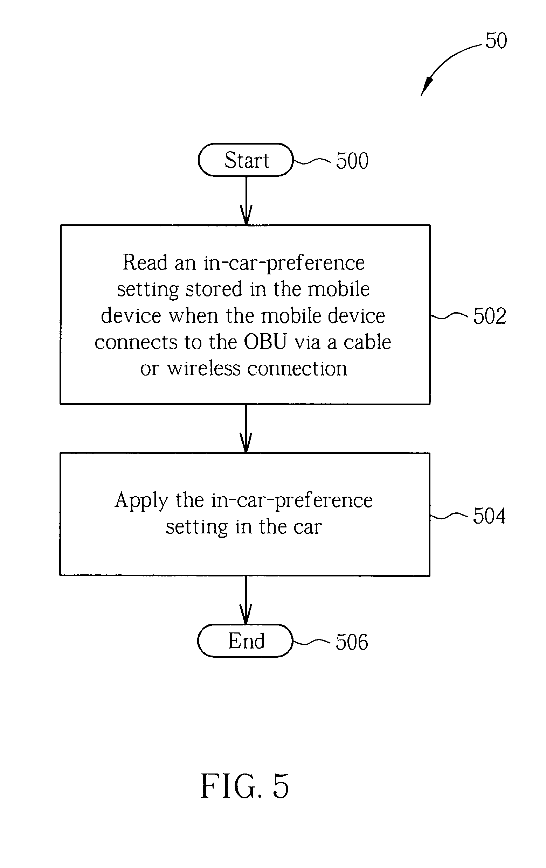

Please refer to Fig. 5, which illustrates a flowchart of an exemplary process 50. The process 50 is utilized in an on board unit (OBU) in a car for reception service from a mobile device. The process 50 can be compiled into the program code 114 and includes the following steps:

Step 500: Start.

Step 502: Read an in-car-preference setting stored in the mobile device when the mobile device connects to the OBU via a cable or wireless connection.

Step 504: Apply the in-car-preference setting in the car.

Step 506: End.

According to the process 50, a mobile device belonged to a driver or a passenger has stored in-car-preference setting (e.g. FM/AM channel, volume setting, car seat position setting, side mirror setting, driving mode, behavior or habit, etc). Therefore, when the OBU connects to the mobile device, the OBU reads the in-car-preference setting from the mobile device, and automatically applies the in-car-preference setting, so as to reduce time consuming in car environment setup.

Note that, the OBU may provide a user interface for a user to determine that the OBU reads in-car-preference setting from the mobile device.

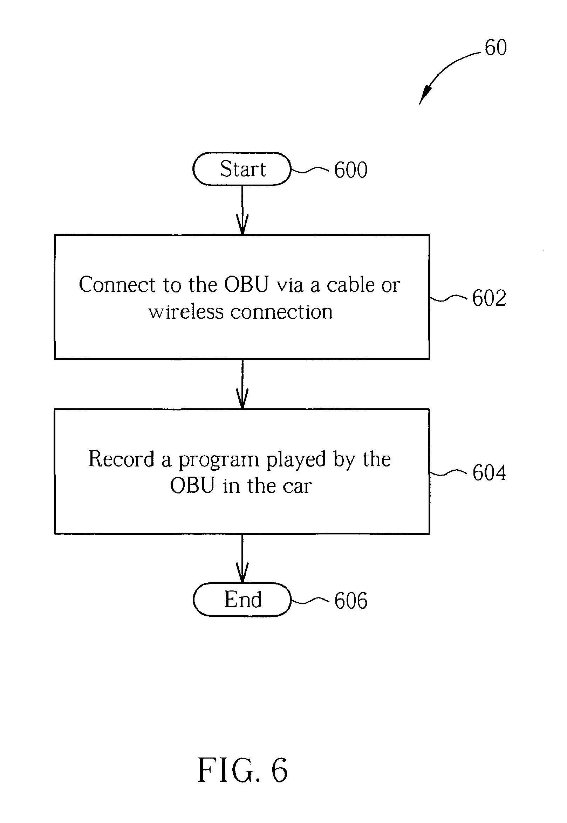

Please refer to Fig. 6, which illustrates a flowchart of an exemplary process 60. The process 60 is utilized in a mobile device for providing service to an on board unit (OBU). The process 60 can be compiled into the program code 114 and includes the following steps:

Step 600: Start.

Step 602: Connect to the OBU via a cable or wireless connection.

Step 604: Record a program played by the OBU in the car.

Step 606: End.

According to the process 60, when the mobile device and the OBU are connected, the mobile device uses a recording application to record the program (e.g. entertainment or infotainment program) which is being played by the OBU in the car. Thus, a driver or a passenger can play the program whenever and wherever again with the mobile device.

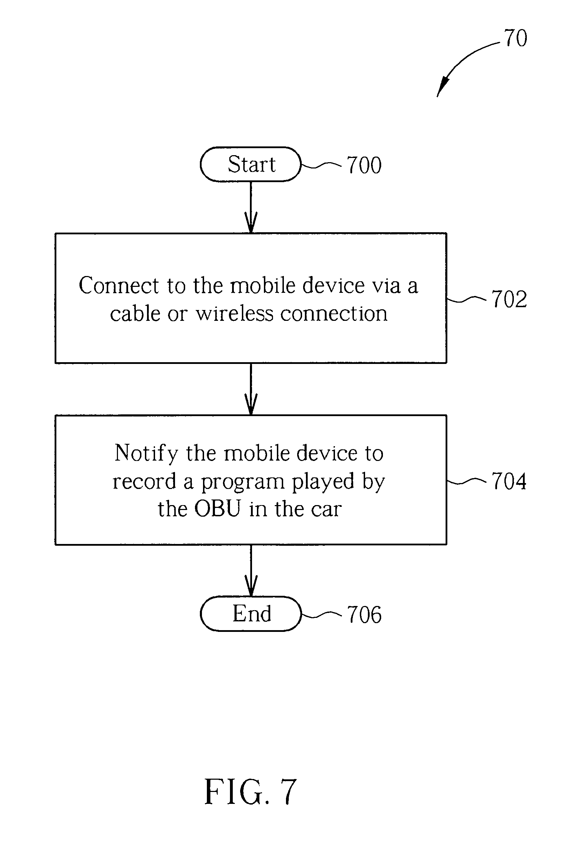

Please refer to Fig. 7, which illustrates a flowchart of an exemplary process 70. The process 70 is utilized in an on board unit (OBU) in a car for reception service from a mobile device. The process 70 can be compiled into the program code 114 and includes the following steps:

Step 700: Start.

Step 702: Connect to the mobile device via a cable or wireless connection.

Step 704: Notify the mobile device to record a program played by the OBU in the car.

Step 706: End.

According to the process 70, when the OBU and the mobile device are connected, the OBU can notify the mobile device to record the program (e.g. entertainment or infotainment program) which is being played by the OBU in the car. In other words, the mobile device provides its recording functionality to the OBU. Thus, a driver or a passenger can play the program whenever and wherever again with the mobile device.

Noticeably, the spirit of the present invention is that the mobile device can provide it' s functionality to the OBU when they are connected via the cable or wireless connection. Thus, the OBU can obtain the service provided by the mobile device.

In conclusion, the exemplary examples and means are provided for providing service to the OBU with the mobile device, so as to extend functionality of the OBU.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of providing service to an on board unit (OBU) in a car with a mobile device, for the mobile device, the method comprising:
connecting to the OBU via a cable or wireless connection; and
providing a positioning/navigation service to the OBU when a notification associated to positioning capability is received from the OBU.

2. The method of claim 1, wherein the notification is sent by the OBU after an event associated to the car condition happens.

3. The method of claim 2, wherein the event associated to the car condition is fuel running out or a part of the car breaking down.

4. A method of providing service to an on board unit (OBU) in a car with a mobile device, for the mobile device, the method comprising:
connecting to the OBU via a cable or wireless connection;
reading an in-car-preference setting from the OBU; and
storing the in-car-preference setting, whereby the OBU reads the in-car-preference setting from the mobile device to apply the in-car-preference setting.

5. The method of claim 4, further comprising:
providing a user interface for a user to determine that the mobile device reads the in-car-preference setting from the OBU.

6. The method of claim 5, wherein the user interface is for the user to determine that the mobile device stores the in-car-preference setting.

7. A method of providing service to an on board unit (OBU) in a car with a mobile device, for the OBU, the method comprising:
reading an in-car-preference setting stored in the mobile device when the mobile device connects to the OBU via a cable or wireless connection; and
applying the in-car-preference setting in the car.

8. The method of claim 7, further comprising:
providing a user interface for a user to determine that the OBU reads the in-car-preference setting from the mobile device.

9. A method of providing service to an on board unit (OBU) in a car with a mobile device, for the mobile device, the method comprising:
connecting to the OBU via a cable or wireless connection; and
recording a program played by the OBU in the car.

10. The method of claim 9, wherein the step of recording the program played by the OBU in the car comprises:
recording the program played by the OBU in the car via a recording application in the mobile device.

11. The method of claim 9, wherein the step of recording the program played by the OBU in the car comprises:
recording the program played by the OBU in the car when the mobile device is notified by the OBU.
